Europäisches Patentamt

European Patent Office

Office européen des brevets

(11) Publication number: **0 465 673 A1**

## EUROPEAN PATENT APPLICATION
### published in accordance with Art. 158(3) EPC

(21) Application number: 91902799.5

(22) Date of filing: **29.01.91**

(51) Int. Cl.⁵: **G01P 15/11**

(86) International application number:
**PCT/JP91/00094**

(87) International publication number:
**WO 91/11723 (08.08.91 91/18)**

(30) Priority: **31.01.90 JP 22738/90**
**08.03.90 JP 57788/90**
**19.04.90 JP 42822/90**
**19.04.90 JP 42823/90**

(43) Date of publication of application:
**15.01.92 Bulletin 92/03**

(84) Designated Contracting States:
**DE GB**

(71) Applicant: **SUMITOMO ELECTRIC INDUSTRIES, LTD.**
**5-33, Kitahama 4-chome, Chuo-ku**
**Osaka-shi, Osaka 541(JP)**

(72) Inventor: **SAITO, Hidetoshi Itami Works of**
**Sumitomo Electric**
**Industries Ltd. 1-1, Koyakita 1-chome**
**Itami-shi Hyogo 664(JP)**
Inventor: **KUME, Masahiro Itami Works of**
**Sumitomo Electric**
**Industries, Ltd. 1-1, Koyakita 1-chome**
**Itami-shi**
**Hyogo 664(JP)**

(74) Representative: **Glawe, Delfs, Moll & Partner**
**Patentanwälte**
**Postfach 26 01 62 Liebherrstrasse 20**
**W-8000 München 26(DE)**

(54) DEVICE FOR MEASURING ACCELERATION AND THE LIKE.

(57) The present invention relates to a device for measuring the acceleration of automobiles etc. The device is for measuring the amount of movement of a movable magnetic body (4) with a transformer and can be also utilized as a position sensor, a tilt sensor, a pressure sensor or the like. The objects of the present invention are to simplify a circuit for processing signals from the secondary coils (7) of the transformer, to improve the measurement sensitivity and to prevent breakage of plate springs holding the magnetic body. To achieve the objects, one of the following structures is used. 1) The moving center of the movable magnetic body is biased from the center between two secondary coils of the transformer toward one of the coils. 2) The magnetic core of the transformer is made up of a movable magnetic body and a fixed magnetic body (5), the movable one being so supported that it can approach and leave the fixed one. 3) Two air gaps between the movable magnetic body and the fixed magnetic body are different in width. 4) The two secondary coils are different in number of turns.

Fig. 1

[Technical Field]

This invention relates to a detector for detecting acceleration or deceleration of a moving body such as an automobile by use of a differential transformer. The detector of this invention can also be used as any other sensor for detecting the movement of a movable magnetic body with a differential transformer, such as a position sensor, an inclination sensor and a pressure sensor. In the following description, the detector is used for detecting acceleration by way of example.

[Background Art]

One known method of detecting acceleration of a moving body is to detect the magnetic body moving under acceleration by use of a differential transformer and produce changes of its outputs corresponding to the displacement of the magnetic body at the secondary coil of the transformer.

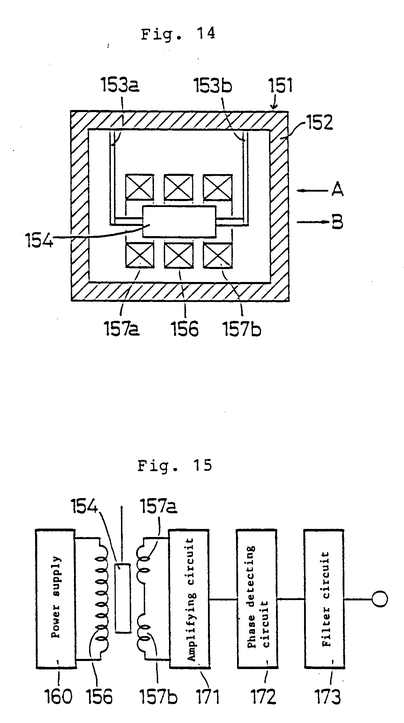

One example is shown in Fig. 14. In this differential transformer type acceleration detector 151, when acceleration is applied in the direction A in the figure, a magnetic body 154 supported by leaf springs 153a and 153b moves in the direction B in the figure while resiliently deforming the leaf springs. With this movement, a portion of the magnetic body 154 that is located inside a secondary coil 157b on the righthand side in the figure will be longer than a portion of the magnetic body located inside a secondary coil 157a on the lefthand side in the figure. Thus there will be produced a difference in the induced voltage between the secondary coils 157a and 157b. Acceleration is detected by measuring this difference.

In the figure, 156 is a primary coil and 152 is a case.

One prior art detector of this kind is shown in Unexamined Japanese Utility Model Publication 59-95266.

Fig. 15 shows a circuit configuration of a prior art acceleration detector using a differential transformer. In the figure, 160 is a power supply for exciting a primary coil 156 of a differential transformer and 157a and 157b are secondary coils of the differential transformer which are connected with their phases reverse to each other. In this detector, when the magnetic body 154 displaces from its balance point under the influence of acceleration, the voltages of the secondary coils 157a and 157b will change proportionally, thus increasing the amplitude of the output voltage at the secondary side. The output voltage is applied to an amplifying circuit 171, a phase detecting circuit 172 and a filter circuit 173. The output thus processed is taken out as an acceleration signal.

This type of conventional detector uses a phase detecting circuit for converting the output voltage at the secondary coil of the differential transformer into a linear output corresponding to the acceleration. This complicates the circuit structure and thus increases the cost. Also, since the secondary coils are wound with their phases equal to and opposite to each other, the entire detector tends to be large in size and heavy in weight.

Further, since the magnetic body moves only a little when the acceleration is small, no substantial voltage difference will be produced between the secondary coils. Thus, the sensitivity of detection is bad. Moreover, if the magnetic body is suspended from leaf springs, the leaf springs can be deformed permanently or broken if an excessive acceleration is applied.

Also, since voltage differences are produced by use of changes in the relative position between the secondary coils and the magnetic body, high positioning accuracy is required. This lowers the efficiency of assembly because of time-consuming adjustment and thus increases the assembly cost.

An object of this invention is to provide a novel acceleration detector which is free of these various problems.

[Disclosure of the Invention]

In one embodiment of this invention, a movable magnetic body has its center with respect to the direction of movement located deviated from the center between two secondary coils when no physical quantity to be detected such as acceleration is applied, that is, in the preset state, so that the abovementioned amount of deviation will be larger than the amount of deviation of the movable magnetic body when the maximum physical quantity within the detectable range is applied.

In another embodiment, two air gaps defined between the movable magnetic body and the fixed magnetic bodies located opposite to both ends of the movable magnetic body have different widths when no physical quantity to be detected such as acceleration is applied, so that the above difference in width will be larger than the amount of displacement of the movable magnetic body when the maximum physical quantity within the detectable range is applied.

In still another embodiment, there is a difference in the number of windings between two secondary

3

EP 0 465 673 A1

coils of the differential transformer. In the structure where the differential transformer has two primary coils, the numbers of windings of two primary coils may differ from each other. Irrespective of whether such a difference in the number of windings exists between the two primary coils or between the two secondary coils, it is important to determine the difference in the number of windings so that the output voltage due to the difference in the number of windings is larger than the maximum variation in the output voltage at both ends of the secondary coils when the movable magnetic body is within the detectable range.

The combined output voltage obtained at the secondary side can be converted into a linear output by passing it through a processing circuit for the combined output having an amplification circuit, a rectifying circuit, a filter circuit, etc. In the processing circuit herein used, amplification may be carried out again as necessary after amplification and rectification.

In yet another embodiment, a non-differential type transformer is used in place of a differential type transformer. It has a core comprising fixed cores and a movable core with the movable core supported so as to be movable toward and away from the fixed cores. Thus a secondary coil of the transformer produces a difference in output corresponding to the displacement of the movable core.

If the movable core of this detector is mounted on a free end of a leaf spring, its displacement represents variations in acceleration and inclination. Such a detector can be used as an acceleration detector or an inclination detector.

The movable core may be so adapted as to be movable in response to the relative displacement of an object or in response to pressure changes, so that the detector can be used as a position detector and a pressure detector, respectively.

Since the magnetic flux changes greatly in response to displacement of the movable core, the sensitivity of detection increases. Further, since there is no need for an oppositely phased coil portions, which was necessary with a conventional differential transformer, the weight and cost of the detector can be reduced.

The simplified structure of the output processing circuit for attaining linear output characteristics with respect to changes in acceleration also serves to reduce the cost and to increase its reliability.

Further, the fixed cores provided at both sides of the movable core serve to prevent excessive movement of the movable core. Thus, even when the movable core is supported by leaf springs, the leaf springs are prevented from deflecting so remarkably as to be deformed permanently or broken.

As described above, a difference in output is produced making use of the changes in the gaps between the fixed cores and the movable core. Thus, positioning of the parts is easy. Namely, the dimensional accuracy of coils is usually bad because they are wound on bobbins made of resin. Thus, in the conventional method, the relative position between the movable magnetic body and the coils cannot be set accurately. But according to this invention, the accuracy of gaps is determined by the combination of metal members which can be worked with high accuracy. Thus, the positioning during assembly can be made easily as described above.

Further, by forming at least a magnetic path out of a magnetic material or by providing a yoke on the magnetic path in the case, the magnetic reluctance can be reduced furthermore, so that the output will increase still more.

Thus, the sensitivity of detection improves even though the size is small. Also, this arrangement is resistant to excessive acceleration and shock. Also, manufacture is easy and thus the cost can be cut down furthermore.

In another embodiment, a coil is provided at the secondary output portion of the differential transformer to add the voltage induced by the magnetic flux of the primary coil to the output at the secondary coil.

The combined output voltage produced at the secondary side can be converted into a linear output by passing it through an amplifying circuit, a rectifying circuit, a filter circuit, etc. In the processing circuit herein used, re-amplification may be done as necessary after amplification and rectification.

[Brief Description of the Drawings]

Fig. 1 is a sectional view showing the detector of the first embodiment, Fig. 2 is a graph showing the output characteristics of the detector, Fig. 3 is a sectional view of the second embodiment, Fig. 4 is a sectional view of the third embodiment, Fig. 5 is a sectional view of the fourth embodiment, Fig. 6 is a sectional view of the fifth embodiment, Fig. 7 - 9 are sectional views of the sixth - eighth embodiments, Fig. 10 is a diagram showing in a simplified form an example of the circuit configuration at the secondary output side of the detector according to this invention, Fig. 11 is a similar diagram showing another embodiment, Fig. 12 is a diagram showing in a simplified form the ninth embodiment, Fig. 13 is a diagram showing the tenth embodiment, Fig. 14 is a view showing a conventional differential transformer type acceleration

4

detector, and Fig. 15 is a view showing the circuit construction of the conventional differential transformer type acceleration detector.

[Best Mode for Embodying the Invention]

[First Embodiment]

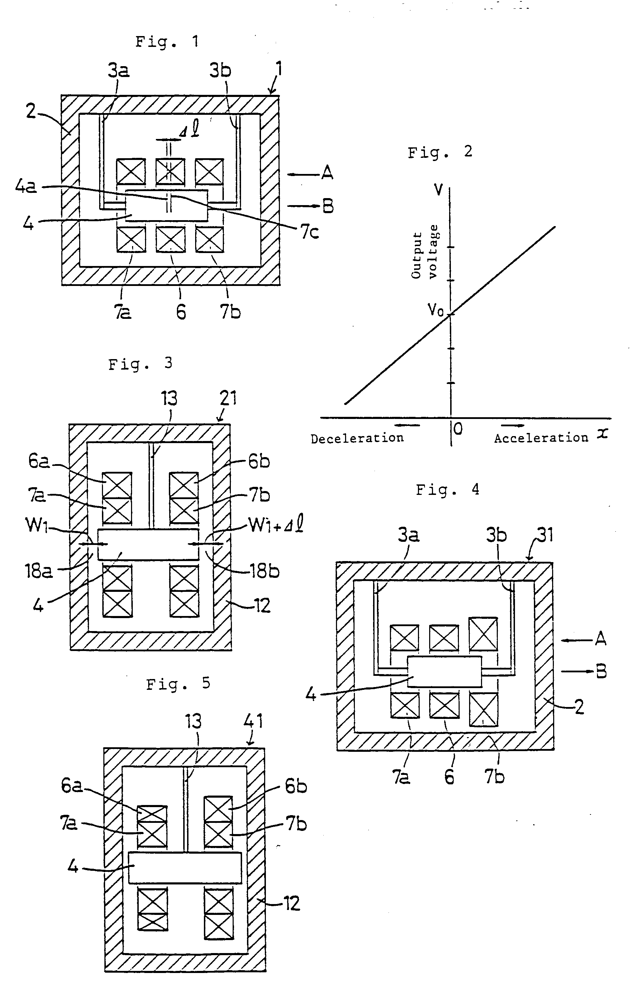

Fig. 1 shows an acceleration detector as the first embodiment. In this differential transformer type acceleration detector 1, when acceleration is applied in the direction A in the figure, a movable magnetic body 4 mounted in a case 2 and supported by leaf springs 3a and 3b will move in the direction B in the figure while resiliently deforming the leaf springs. 6 is a primary coil of the differential transformer, and 7a and 7b are secondary coils. In the no-load state shown in the figure, the center of the movable magnetic body 4 with respect to the direction of its movement (center with respect to the longitudinal direction) is deviated by a distance $\Delta\ell$ toward the coil 7a.

Fig. 2 shows the output characteristic of the acceleration detector of Fig. 1. When the acceleration applied to the detector 1 is zero, an output Vo sin wt corresponding to the amount of deviation $\Delta\ell$ is produced at both ends of the secondary coils. On the other hand, when an acceleration x acts on the detector 1, the output will be (Vo - kx) sin wt (where k is a proportional constant). An AC output will be produced in proportion to the acceleration. By passing the AC output thus obtained through a rectifying circuit and a smoothing circuit (not shown), a DC output proportional to the acceleration can be obtained without the need for a wave detecting circuit which would complicate the circuit structure.

The illustrated acceleration detector can detect acceleration within the range of -1 G to +1G while the movable magnetic body 4 is adapted to displace 0.5 mm in response to an acceleration of 1G. Also the deviation $\Delta\ell$ of the center of the body 4 is set at 3 mm. Thus, even if an acceleration of 1G, the maximum acceleration within the detecting range, is applied, the center of the movable magnetic body will not pass the center 7c between the two secondary coils. This prevents reversal in phase of the output signal.

[Second Embodiment]

Fig. 3 shows the second embodiment in which an acceleration detector 21 differs from the detector shown in Fig. 1 in that the differential transformer has two separate primary coils 6a and 6b, and that a single leaf spring 13 is used. In the detector shown in Fig. 1, the output voltage V changes corresponding to the difference between the amount (volume) of the movable magnetic body 4 located in the secondary coil 7a and that in the secondary coil 7b. In the detector of Fig. 3, the output voltage changes corresponding to the difference in width between the air gaps defined by a case 12 made of a magnetic material and both ends of the movable magnetic body 4 (i.e. difference in the magnetic reluctance due to the difference in size between the gaps).

In this embodiment, there is a difference $\Delta\ell$ in width between the two air gaps 18a and 18b in no-load conditions (W1 = W + $\Delta\ell$), so that the AC output voltage produced at both ends of the secondary coils 7a and 7b when the acceleration is zero will be Vo sin wt as in case of the detector of Fig. 1.

When acceleration x is applied, the movable magnetic body 4 will displace. Due to this displacement, the difference in width $\Delta\ell$ changes, so that the secondary output changes according to the change in width $\Delta\ell$.

In this acceleration detector 11, too, the difference in width $\Delta\ell$ between the air gaps is set so as to be larger than the displacement of the movable magnetic body when the maximum acceleration within the detecting range is applied. Thus, no reversal in phase of the AC output will occur. This eliminates the need of providing a phase detecting circuit in the output processing circuit.

Supposing that the deviation of the movable magnetic body is $\Delta\ell$, and the displacement of the movable magnetic body when the maximum physical quantity within the detectable range is applied is S, the relation $\Delta\ell > S$ is maintained as long as the physical amount applied to the detector is within the detectable range. Namely, the center of the movable magnetic body will never go beyond the center between the secondary coils.

If the center of the movable magnetic body should move across the center between the secondary coils to the opposite side, the phase of the output voltage will be reversed. But, as described above, while the relation $\Delta\ell > S$ is maintained, no reversal in phase will happen. This eliminates the need of providing a phase detecting circuit in the circuit portion provided downstream of the secondary coils. Thus, a linear DC output corresponding to the acceleration can be obtained simply by rectifying and smoothing.

Also, the output processing circuit for obtaining linear output characteristics in response to changes in the physical amount such as acceleration can be simplified in structure. This allows further cutdown in cost.

The simplified structure of the output processing circuit serves to increase its reliability.

[Third Embodiment]

Fig. 4 shows an acceleration detector as the third embodiment, which is a differential transformer type acceleration detector 31. It has a movable magnetic body 4 mounted in a case 2 and supported by leaf springs 3a and 3b. When acceleration is applied in the direction of A in the figure, the movable magnetic body 4 will move in the direction B while resiliently deforming the leaf springs. Numeral 6 represents a primary coil, 7a and 7b are secondary coils connected together with the phase reversed. In this embodiment, the numbers of windings for the primary coil 6 and the secondary coils 7a and 7b are 1000, 1000 and 1500 turns, respectively.

Since the numbers of windings for the two secondary coils differ from each other, even when no acceleration is applied, there is a difference in the voltage generated between 7a and 7b. The difference increases or decreases when acceleration is applied. Such increase or decrease corresponds to the acceleration. The ratio of numbers of windings between 7a and 7b is adjusted so that the voltage will not be minus even if the differential voltage is the minimum within the detectable range.

The differential voltage between the secondary coils is converted into DC signals in an output processing circuit (not shown) comprising an amplifying unit, a smoothing unit and a filter unit and taken out as an output of the detector.

Fig. 2 shows such DC output. When the leaf springs are stationary at their position of equilibrium, where acceleration is zero, voltage Vo will be produced. The value Vo will increase or decrease with the magnitude of acceleration.

[Fourth Embodiment]

Fig. 5 shows the fourth embodiment in which 12 represents a case and 13 a leaf spring. The differential transformer of this acceleration detector has two separate primary coils 6a and 6b, each adapted to generate voltages in the secondary coils 7a and 7b. In this embodiment, the numbers of windings of the secondary coils 7a and 7b are both 1000 turns while those of the primary coils 6a and 6b differ from each other, i.e. the former being 500 turns and the latter being 1000 turns.

In this embodiment, as in the third embodiment, signals having the characteristic as shown in Fig. 2 can be produced without using a phase detecting circuit.

As described above, in the third and fourth embodiments, the numbers of windings of the two secondary coils in the differential transformer differ from each other or if there are two primary coils, either the numbers of windings of the primary coils or those of the secondary coils differ from each other, so that an output voltage greater than the amount of change in the output voltage within the detectable range will be produced. Thus, no reversal in phase will happen during detection. This in turn makes it possible to simplify the structure of the output processing circuit for obtaining linear output characteristics in response to the change in the physical quantity to be detected such as acceleration. This leads to further reduction in cost.

Also, by simplifying the structure of the output circuit, its reliability increases.

Suppose now that the input power supply voltage (that is, voltage at the primary coil in the differential transformer) is $V_1 \sin 2\pi ft$ (f is the line frequency) and that the output voltage produced at the two secondary coils by the magnetic flux of the primary coil is $V_{2-1} \sin 2\pi ft$, $V_{2-2} \sin 2\pi ft$. Then if the ratio of the numbers of windings of the two secondary coils is 1 : S, the output voltage at one of the secondary coils will be $V_{2-1} \sin 2\pi ft$ while that of the other will be $SV_{2-1} \sin 2\pi ft$. Also, supposing that the acceleration or deceleration is x and the proportional constant is k, these output voltages are expressed as $V_{2-1}(1 + kx) \sin 2\pi ft$ for one coil and $SV_{2-1}(1 + kx) \sin 2\pi ft$ for the other coil (kx will be plus at the side toward which the movable magnetic body moves and will be minus at the side from which it moves away). Since the two secondary coils are connected together with their phases reversed, the total of the output voltages at both ends thereof will be :

$V_{2-1} (1 + kx) \sin 2\pi ft$

$- SV_{2-1} (1 - kx) \sin 2\pi ft$

$= \{(1 - S) + (1 + S)kx\} V_{2-1} \sin 2\pi ft$

Thus, if the measuring range of x is - $\alpha$ < x < $\alpha$ (the output voltage will be always maintained in the same phase within the measuring range by setting the ratio S of the numbers of windings so as to satisfy the formula):

{1 - S + (1 + S) k$\alpha$ > 0 and
1 - S + (1 + S) k (-$\alpha$) > 0}

or:

{1 - S + (1 + S) k$\alpha$ < 0 and
1 - S + (1 + S) k (-$\alpha$) < 0 }

namely:

$$\left\{ S < \frac{1 + k\alpha}{1 - k\alpha} \quad \text{and} \quad S < \frac{1 - k\alpha}{1 + k\alpha} \right\}$$

or:

$$\left\{ S > \frac{1 + k\alpha}{1 - k\alpha} \quad \text{and} \quad S > \frac{1 - k\alpha}{1 + k\alpha} \right\}$$

With this arrangement, a linear DC output can be obtained simply by rectifying and smoothing without the need of phase detection.

In this embodiment, the two secondary coils have different numbers of windings from each other. But if the differential transformer has two primary coils provided independently of each other, the numbers of windings of these two primary coils may be different from each other to eliminate the need of phase detection.

[Fifth Embodiment]

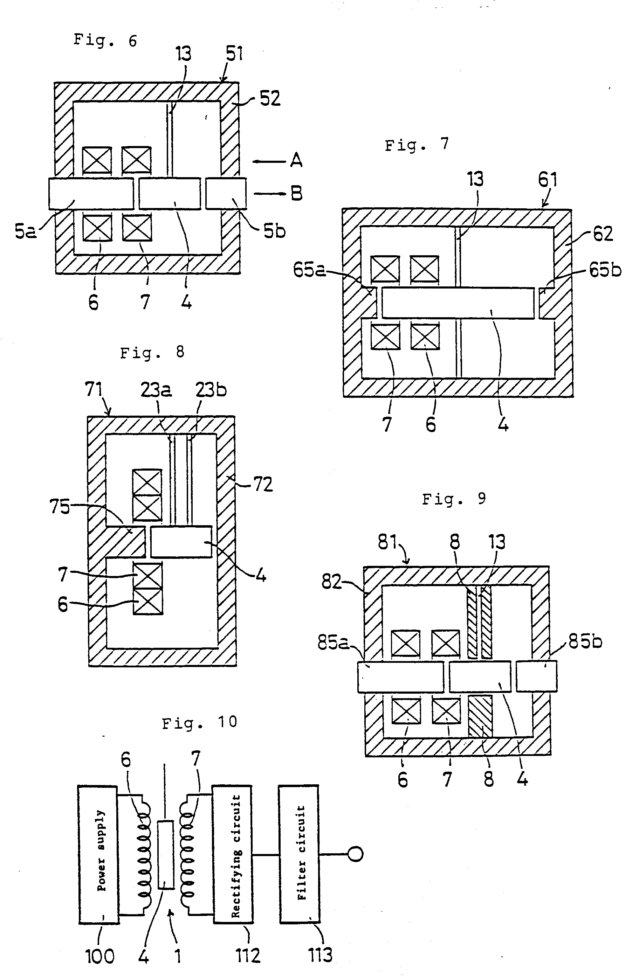

Fig. 6 shows schematically the fifth embodiment. The acceleration detector 51 of this embodiment has a case 52 made of a magnetic material, a leaf spring 13 having one end thereof secured to the case 52, a movable core 4 having a predetermined mass and fixed to the other or free end of the leaf spring 13. At both sides of the movable core 4, there are provided fixed cores 5a and 5b supported by the case 52. Predetermined gaps are formed between the movable core 4 and the fixed cores 5a and 5b. Around the outer periphery of the movable core 4 and the fixed cores 5a and 5b, there are provided a primary coil 6 for producing a magnetic flux and a secondary coil 7 for detecting changes in the magnetic flux. They are arranged concentrically. The coils may be supported by the fixed cores or the case.

The movable core 4 of the detector of the fifth embodiment will undergo a force F = M • G (M is the mass of movable core) when the moving body is being accelerated or decelerated. The force F will move the movable core 4 while resiliently deforming the leaf spring 13 until it balances with the resilient force of the leaf spring 13. Such displacement is proportional to the acceleration G if the spring constant of the leaf spring and the mass M are constant. Thus, the gaps between the fixed cores 5a and 5b and the movable core 4 change in proportion to the acceleration G.

If deceleration acts on the acceleration detector 51 in the direction of A in the figure, the movable core 4 moves in the direction A. Thus, the gap at the fixed core 5a decreases while the gap at the fixed core 5b increases. As a result, magnetic flux can move smoothly from the fixed core 5a to the movable core 4, so that the amount of magnetic flux transferred from the primary coil 6 to the secondary coil 7 increases, inducing a larger voltage at the secondary coil than when the acceleration is zero.

If the deceleration acting in the direction A is excessively large, the movable core 4 will abut the fixed core 5b, so that it cannot move any further. Thus, the leaf spring 3 will not deflect excessively even if excessive deceleration acts thereon, so that it is protected against permanent deformation and breakage.

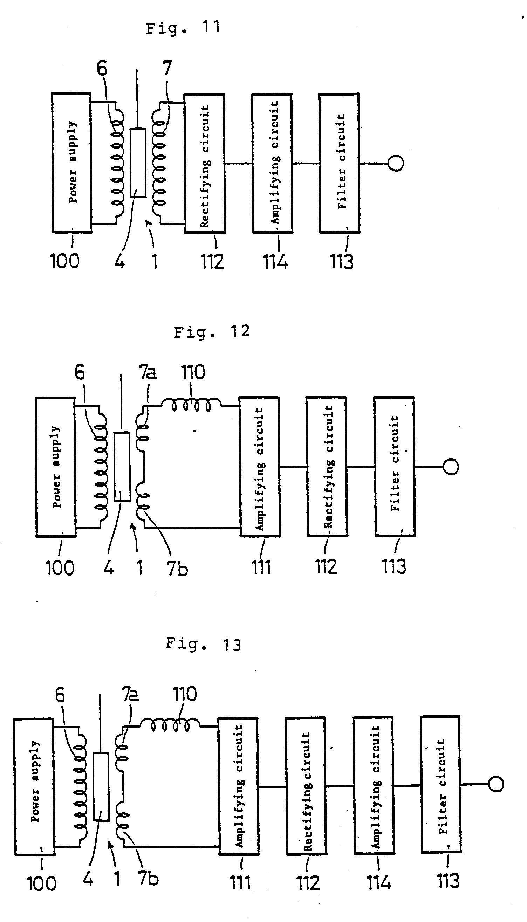

On the other hand, when deceleration acts in the direction B, the gap at the fixed core 5a increases, so that the amount of magnetic flux transmitted from the primary coil 6 to the secondary coil 7 increases,

EP 0 465 673 A1

inducing a smaller voltage at the secondary coil than when the acceleration is zero. These output voltages at the secondary coil are processed in an output processing circuit as shown in Fig. 10 or 11. In Figs. 10 and 11, numeral 1 designates a detector, 100 power supply for the primary coil 6, 7 secondary coil, 4 a movable core, 112 a rectifying circuit and 113 a filter circuit. Numeral 111 in Fig. 11 is an amplifying circuit. Both in Figs. 10 and 11, the rectifying circuit 112 may be replaced with an amplifying/rectifying circuit.

These processing circuits can be used for processing secondary outputs of the detectors in other embodiments, too.

[Sixth Embodiment]

Fig. 7 is a schematic view of the sixth embodiment. The acceleration detector 61 of this embodiment has a similar structure and function as the fifth embodiment but differs therefrom in that the leaf spring 13 is fixed at upper and lower two points, that the primary coil 6 is provided concentrically around the outer periphery of the movable magnetic core 4, with the secondary coil 7 located outside the primary coil and that the fixed cores 65a and 65b are integral with the case 62. By arranging the primary coil inside (near the leaf spring) and the secondary coil outside (near the case), the size and weight of the movable core 4 can be increased without incurring increase in the size of the detector. Thus, this arrangement is advantageous in improving the sensitivity.

If the movable magnetic core 4 has a large mass, it might move and cause change in the output voltage not only in response to acceleration in the normal directions but in response to acceleration in a vertical direction. In this embodiment, this problem is prevented by supporting the leaf spring at two points.

Further, in this embodiment, not only the fixed cores but also the entire case is made of a magnetic material. This serves to reduce the magnetic reluctance in the magnetic circuit near the coils and thus to increase the rate of magnetic reluctance at the gap portions with respect to the entire magnetic reluctance. Thus the acceleration can be detected with higher sensitivity.

[Seventh Embodiment]

Fig. 8 shows schematically the structure of the seventh embodiment.

This acceleration detector 71 has a structure and function similar to the fifth and sixth embodiments. But it differs therefrom in that the movable core 4 is supported by two cantilever leaf springs 23a ad 23b extending parallel to each other, that the secondary coil 7 is arranged concentrically around the outer periphery of the primary coil 6 and that the fixed core 75 is integral with the case 72.

In the seventh embodiment, by the provision of two cantilever leaf springs, the movable core can move in as stable a manner as it is supported by a leaf spring held at two points, whereas its displacement can be kept as large as it is supported by a cantilever leaf spring. In other words, this arrangement makes it possible to satisfy two mutually contradictory requirements, i.e. stable movement and high output.

By disposing the primary and secondary coils one over the other, the coil width can be shortened. This is advantageous when installation space is limited in the direction in which acceleration acts.

[Eighth Embodiment]

Fig. 9 shows the eighth embodiment.

This acceleration detector 81 has the same structure as the fifth embodiment except that a yoke 8 made of a magnetic material is provided at both sides of the leaf spring 13 to reduce the magnetic reluctance in the magnetic circuit that extends from the primary coil to the secondary coil. The yoke 8 serves to return the magnetic flux produced in the primary coil 6 into a fixed core 85a through the movable core 4, the yoke 8 and a case 82 made of a magnetic material. Thus, the portions where the magnetic reluctance is high in the magnetic circuit are only the gap portions between the fixed cores and the movable core. This serves to improve the detecting sensitivity because changes in output due to changes in gaps are made clearer. In the eighth embodiment, the fixed core 85b is preferably made of a non-magnetic material.

The magnetic flux produced in the primary coil is transmitted to the movable core through the fixed cores or to the fixed cores through the movable core (the order of transmission changes according to the location of the primary coil) and then to the secondary coil, inducing voltage in the secondary coil. The magnitude of the induced voltage is determined by the amount of magnetic flux passing through the secondary coil. The amount of magnetic flux passing through the secondary coil is in turn determined by the magnetic reluctance in the magnetic circuit at the portion from the primary coil to the secondary coil.

8

According to this invention, the fixed cores serve to reduce the entire magnetic reluctance in the circuit. Also, changes in the magnetic flux can be amplified by changes in gaps due to displacement of the movable core.

Suppose that the movable core has moved toward one of the fixed cores under the influence of deceleration. Then the gap between movable core and the fixed core around which the primary and secondary coils are provided decreases, so that a high output voltage is produced in the secondary coil due to change in the magnetic flux. Thus, by measuring such change in voltage in the secondary coil, even very small acceleration can be detected.

When pulses having a voltage crest value $V_1$ and a frequency f are applied to the primary side of the transformer, a waveform having a voltage crest value $V_2 = nV_1$ (n is the ratio of number of windings of the primary coil to that of the secondary coil) is produced at the secondary output for a frequency of f.

If acceleration acts and the movable core moves from the position of equilibrium to reduce the gap length by x, the voltage crest value of the secondary output will be $V_2 = nV_1 (1 + kx)$ (k is a proportional constant) if the frequency is f. If acceleration acts and the movable core moves in such a way as to increase the gap length by x, the voltage crest value of the secondary output will be $V_2 = nV_1(1 - kx)$ at the same frequency.

By amplifying and rectifying (or simply rectifying) the voltage and further, as necessary, amplifying and filtering (or simply filtering) it, linear output characteristics corresponding to acceleration or deceleration which produces a positive output voltage can be obtained easily within a predetermined acceleration range.

In the fifth to eighth embodiments, detection is made in principle not by utilizing a difference in induced voltage produced between two secondary coils due to change in relative position between the secondary coils but by utilizing a difference in voltage (output of the detector) due to gaps between the fixed core and the movable core. Thus not very high accuracy is required in positioning the coils and the movable core relative to each other. Also, since the fixed cores which constitute a magnetic path serve to reduce the entire magnetic reluctance in the two magnetic circuits, detecting sensitivity for small change in the magnetic reluctance improves. Thus compared with acceleration, the output voltage increases greatly. Further, the fixed cores serve as stoppers to prevent excessive movement of the movable core. Thus, no undue force acts on the leaf springs.

[Ninth embodiment]

Fig. 12 shows schematically the structure of the ninth embodiment. In the figure, numeral 100 designates a power supply, 6 is a primary coil of a differential transformer excited by the power supply 100, 7a and 7b are secondary coils of the differential transformer. Coil 7a and coil 6 have the same phase while coil 7b and coil 6 have their phases opposite to each other.

A movable magnetic body 4 moves corresponding to acceleration. 110 is a coil connected in series to the output portion of the secondary coils. The serial coil 110 adds the voltage induced by the magnetic flux in the primary coil to the output of the secondary coils with the same or reverse phase.

With this arrangement, when the acceleartion is zero and the movable magnetic body 4 is stationary at the point of equilibrium, the sum of the voltages at the secondary coils 7a and 7b will be zero because they offset each other. Thus, the combined output voltage V at the secondary side represents only the voltage produced in the serial coil 110, i.e. $V = Vo \sin 2\pi ft$.

On the other hand, when the movable magnetic body 4 is moved under acceleration, the sum of the voltages in the secondary coils 7a and 7b increases. The sum, which is proportional to the acceleration x, will be $kx \sin 2\pi ft$ (k is a proportional constant). Thus, the combined output voltage V will be $V = (Vo + kx) \sin 2\pi ft$. When the movable magnetic body 4 is moved under deceleartion, the sum of the voltages in the coils 7a and 7b decreases, so that the combined output voltages will be $V = (Vo - kx) \sin 2\pi ft$.

The combined output voltage thus obtained is applied to an amplifying circuit 111, a rectifying circuit 112 and a filter circuit 113. The output voltage V produced at the last output stage will be $V = Vo + kx$ (or $Vo - kx$ during deceleration).

[Tenth Embodiment]

Fig. 13 shows schematically the structure of the tenth embodiment. This detector has a processing circuit for processing a combined output voltage which comprises an amplifying circuit 111, a rectifying circuit 112, an amplifying circuit 114 and a filter circuit 113. Otherwise, this embodiment is the same as the first embodiment.

The serial coil 110 may be formed integral with the differential transformer or may be integral with the processing circuit for processing the combined output voltage at the secondary side.

Suppose now that the input supply voltage (= voltage in the primary coil of the differential transformer) is $V_1$ sin $2\pi$ft, the voltage induced, by the magnetic flux in the primary coil, in the serial coil provided according to the present invention at the secondary side is Vo sin $2\pi$ft, and the output voltage in the secondary coil of the differential transformer is $V_2$ sin$2\pi$ft. Then the combined output pressure at the secondary side of the differential transformer will be V = Vo sin $2\pi$ft + $V_2$ sin $2\pi$ft. The output voltage of the secondary coil is k x sin $2\pi$ft (where x is acceleration or deceleration and k is a proportional constant). Thus, the aforementioned V will be equal to (Vo + kx) sin $2\pi$ft (x $\geq$ 0) when accelerated and will be equal to (Vo - kx) sin $2\pi$ft (x > 0) when decelerated. For example, by setting the Vo value sufficiently large so as to satisfy the relation Vo - kx >> 0 and amplifying this value V directly in the amplifying circuit, rectifying it and then removing its power frequency f, linear output characteristics corresponding to acceleration or deceleration which produces e.g. a positive output voltage within a predetermined range of x can be obtained easily. The Vo value can be changed easily by adjusting the ratio of windings of the serial coil provided at the secondary side.

As described above, in the ninth and tenth embodiments, by the addition of a coil at the secondary output portion of the differential transformer to add the voltage induced by the magnetic flux of the primary coil to the output at the secondary coil at the same or reverse phase, the structure of the output processing circuit for obtaining linear output characteristics in response to change in acceleration can be simplified. This permits further cutdown in cost (since the serial coil can be added at low cost).

The simplified structure of the output processing circuit serves to increase its reliability, too.

**Claims**

1. A detector for acceleration and the like having a movable magnetic body movable in response to acceleration or changes in position, degree of inclination or pressure, a differential transformer for detecting the displacement of said movable magentic body to produce an output corresponding to the displacement of said movable magnetic body at a secondary side of said transformer, characterized in that said movable magnetic body (4) is deviated from the center between two secondary coils (7) toward one of said secondary coils when the physical quantity to be detected such as acceleration is not applied thereto, the amount of said deviation being larger than the displacement of said movable magnetic body when the maximum physical quantity within a detectable range is applied.

2. A detector for acceleration and the like having a movable magnetic body movable in response to acceleration or changes in position, degree to inclination or pressure, a differential transformer for detecting the displacement of said movable magnetic body to produce an output corresponding to the displacement of said movable magnetic body at a secondary side of said transformer, characterized in that there is a difference in width between two air gaps defined by said movable magnetic body (4) and fixed magnetic bodies (5) provided at both sides of said magnetic body when the physical quantity to be detected such as acceleration is not applied thereto, said difference being larger than the displacement of said movable magnetic body when the maximum physical quantity within a detectable range is applied.

3. A detector for acceleration and the like having a movable magnetic body movable in response to acceleration or changes in position, degree of inclination or pressure, a differential transformer for detecting the displacement of said movable magnetic body to produce an output corresponding to the displacement of said movable magnetic body at a secondary side of said transformer, characterized in that there is a difference in the number of windings between two secondary coils (7), said difference being so determined that an output voltage due to said difference in the number of windings is larger than the amount of change in output voltages at both ends of said secondary coils when said movable magnetic body (4) is within a detectable range.

4. A detector for acceleration and the like having a movable magnetic body movable in response to acceleration or changes in position, degree of inclination or pressure, a differential transformer having two primary coils for detecting the displacement of said movable magnetic body to produce an output corresponding to the displacement of said movable magnetic body at a secondary side of said transformer, characterized in that there is a difference in the number of windings between said two primary coils (6), said difference being so determined that an output voltage due to said difference in the number of windings is larger than the amount of change in output voltages at both ends of said secondary coils when said movable magnetic body (4) is within a detectable range.

5. A detector for acceleration and the like having a non-differential type transformer having a core comprising a fixed core (5) and a movable core (4), said movable core being supported so as to be movable toward and away from said fixed core, thereby producing a difference in output between secondary coils of said transformer corresponding to the displacement of said movable core.

6. A detector for acceleration or the like as claimed in claim 5, wherein said movable core (4) extends through a hollow space formed in the coils and is secured to a free end of a leaf spring (13) supported by a case, and wherein fixed cores (5) are provided opposite to and spaced a predetermined distance from both ends of said movable core with respect to the direction of movement of said movable core.

7. A detector for acceleration or the like as claimed in claim 5 or 6, wherein a primary coil (6) of said transformer is provided concentrically around the outer periphery of said fixed core.

8. A detector for acceleration or the like as claimed in claim 5, 6 and 7, wherein a primary coil (6) of said transformer is provided concentrically around the outer periphery of said movable core (4).

9. A detector for acceleration or the like as claimed in any of claims 6 - 8, wherein part or whole of said case is formed of a magnetic material.

10. A detector for acceleration or the like as claimed in any of claims 6 - 9, further comprising yokes provided at both sides of said leaf spring, said yokes forming part of a magnetic circuit.

11. A detector for acceleration or the like as claimed in any of claims 5 - 10, wherein said transformer is provided in its secondary output portion with an output processing circuit comprising an amplifying circuit, a rectifying a circuit, a filter circuit or the like.

12. A detector for acceleration and the like having a movable magnetic body movable in response to acceleration or changes in position, degree of inclination or pressure, a differential transformer for detecting the displacement of said movable magnetic body to produce an output corresponding to the displacement of said movable magnetic body at a secondary side of said transformer, characterized in that said detector further comprises a coil provided in series at a secondary output portion of said differential transformer to add a voltage induced by a magnetic flux of a primary coil (6) to an output of a secondary coil (7).

13. A detector for acceleration or the like as claimed in claim 12, further comprising a circuit for processing a combined output comprising an amplifying circuit, a rectifying circuit and a filter circuit.

EP 0 465 673 A1

Fig. 1

Fig. 2

Fig. 3

Fig. 4

Fig. 5

12

Fig. 6

Fig. 7

Fig. 8

Fig. 9

Fig. 10

| Power supply | | Rectifying circuit | Filter circuit |

Fig. 11

Fig. 12

Fig. 13

14

EP 0 465 673 A1

Fig. 14

Fig. 15

# INTERNATIONAL SEARCH REPORT

International Application No PCT/JP91/00094

| I. CLASSIFICATION OF SUBJECT MATTER (if several classification symbols apply, indicate all) [6] |
|---|

According to International Patent Classification (IPC) or to both National Classification and IPC

Int. Cl$^5$  G01P15/11

| II. FIELDS SEARCHED |
|---|

**Minimum Documentation Searched [7]**

| Classification System | Classification Symbols |
|---|---|
| IPC | G01B7/00, G01P15/11 |

Documentation Searched other than Minimum Documentation
to the Extent that such Documents are Included in the Fields Searched [8]

| | |
|---|---|
| Jitsuyo Shinan Koho | 1960 – 1990 |
| Kokai Jitsuyo Shinan Koho | 1971 – 1990 |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| Y | JP, A, 57-74603 (Yugen Kaisha Powar-sha), May 10, 1982 (10. 05. 82), Lines 1 to 3, lower left column, page 2 (Family: none) | 3, 4 |

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| March 11, 1991 (11. 03. 91) | March 25, 1991 (25. 03. 91) |

| International Searching Authority | Signature of Authorized Officer |
|---|---|
| Japanese Patent Office | |

Form PCT/ISA/210 (second sheet) (January 1985)